# EUROPÄISCHE PATENTANMELDUNG

(11) **EP 1 026 414 A2**
(43) Veröffentlichungstag der Anmeldung: **09.08.2000**
(21) Anmeldenummer: 00102349.8
(22) Anmeldetag: 03.02.2000
(51) Int. Cl.: F16B 21/07

(54) **Schiebe-Klemmhalterung**

(30) Priorität: 04.02.1999 DE 19904501
(71) Anmelder: Bernauer, Erich, 79725 Laufenburg-Hochsal (DE)
(72) Erfinder: Bernauer, Erich, 79725 Laufenburg-Hochsal (DE)
(74) Vertreter: Termin, Erich

(57) **Zusammenfassung**

Die Erfindung betrifft eine Schiebe- Klemmhalterung zum Festhalten von Gegenständen mit vorwiegend parallel verlaufenden Seitenflächen, die mit einer Bohrungsöffnung (7) versehen sind und mit dieser durch Überschieben auf die Schiebe- Klemmhalterung (1), von den in dieser angeformten Zungen (5) die radial federnd auf die Bohrungswandung (8) klemmend drücken das Festhalten des Gegenstandes (6) bewirken, oder bei einem ortsgebundenen Gegenstand (6) an diesem klemmend, gehalten wird.

## Beschreibung

Die Anmeldung betrifft eine Halterung für Gegenstände, die von dieser durch einfaches Aufschieben klemmend gehalten werden.

In den Druckschriften DE-4225540-C1, DE-19547278-A1 und DE-4444333-A1 sind Klemmhalterungen in Form vorn Druckknöpfen bekannt. Diese Druckknöpfe dienen zum Festhalten und Abnehmen von Gegenständen und haben den Nachteil, dass sie zweiteilig aus Knopfteil und Halteteil ausgebildet sind, die zur Funktion getrennt am festzuhaltenden Gegenstand und am Haltegegenstand entsprechend angebracht sind, wobei das Knopfteil am festzuhaltenden Gegenstand an seiner Seitenfläche konstruktiv erhaben übersteht und bei Voraussetzung parallel verlaufenden Oberflächen an festzuhaltenden Gegenständen nicht angewendet werden können.

Die Erfindung macht sich zur Aufgabe eine Schiebe- Klemmhalterung auszugestalten, die es ermöglicht einen Gegenstand abnehmbar oder für eine Einmalbefestigung nicht mehr abnehmbar zu erhalten, bei der ein Überstehen des Knopfteiles auf den Seitenflächen des festzuhaltenden Gegenstandes nicht vorhanden ist.

Die Aufgabenstellung wird in der Erfindung dadurch gelöst, dass die Schiebe- Klemmhalterung nur aus einem Halteteil besteht das am Haltegegenstand befestigt ist, in dem Halteund Klemmfunktion integriert sind und der festzuhaltende Gegenstand anstatt eines Knopfteiles nur eine Bohrungsöffnung aufweist mit der dieser auf die Klemmhalterung aufgeschoben, entsprechend gehalten wird. Der festzuhaltende Gegenstand kann auch ortsgebunden sein, so dass die Schiebe- Klemmhalterung in diesen eingeschoben wird, um klemmend zu halten. Das Klemmhalteteil der Schiebe- Klemmhalterung wird am Haltegegenstand vorwiegend durch Anschrauben, Vernieten, Durchstecken oder KLeben befestigt und ist in der Ausgestaltung im wesentlichen aus einem länglichen Schaft ausgebildet, der mit einer abgestuften und achsialen verlaufenden Bohrung versehen ist, in dem an seinem vorderen Ende achsiale sehlitzähnliche Ausnehmungen eingeformt sind, zwischen denen sich radial federnde und aufspreizbare Zungen vorhanden sind, die beim Überschieben des festzuhaltenden Gegenstandes mit der an ihm vorgesehenen Bohrungsöffnung klemmend mit Federwirkung auf die Bohrungswandung des festzuhaltenden Gegenstandes drücken und die Klemmhaltung bewirken. Durch die abgestufte Bohrung in der länglichen Schiebe- Klemmhalterung ist achsial ein entsprechend geformter Bolzen oder Gewindebolzen angebracht, der beim Einschieben oder Eindrehen in die Bohrung der länglichen Schiebe- Klemmhalterung am vorderen Ende der Stufenbohrungsverängung, die an den Zungen nach innen zur Bohrung ragenden Verdickungen radial überspreizt und durch die Aufbiegung der Zungen, diese den Federweg erhalten und bei weiterem einschieben des Bolzens bis zur Endstellung, deckt dieser am vorderen Ende der SchiebeKlemmhalterung stirnseitig die scharfen Kanten an der Bohrungsöffnung und Zungen ab. Eine radiale Ausnehmung am Bolzen im Bereich der Zungenverdickungen dient zur Begrenzung des Federweges der Zungen nach innen und an seiner Rückseite kann er als Befestigungsschraube ausgebildet sein. Der längliche Schaft an der Schiebe- Klemmhalterung ist an seinem vorderen Ende an der Umlaufkante leicht angefast oder mit einem Radius versehen, dass der festzuhaltende Gegenstand mit seiner vorgesehen Bohrungsöffnung leichter beim Aufschieben einzentriert. Die Zungen der Schiebe- Klemmhalterung können im Bereich der Verdickung nach innen, auch nach aussen am Umfang eine Verdickung aufweisen, die je nach Ausgestaltung der Auswölbung eine erschwerte Schiebe- Klemmwirkung oder eine nicht abnehmbare Einmalbefestigung bewirken. Das längliche Halteteil der Schiebe- Klemmhalterung, kann am Umfang an seinem hinteren Teil in Bereich der Zungenwurzeln mit einer radialen Ausnehmung versehen sein, mit der die Federkraft der Zungen vorbestimmt werden kann.

In der Zeichnung ist ein Ausführungsbeispiel der Erfindung dargestellt. Es zeigt:

Fig. 1 Vorderansicht des Schiebe- Klemmhalteteiles.

Fig. 2 Seitenansicht zum Teil im Schnitt A-B geöffnet der Schiebe- Klemmhalterung, am Haltegegenstand angeschraubt mit einem festzuhaltenden Gegenstand in Form eines Einkaufswagen - Chip.

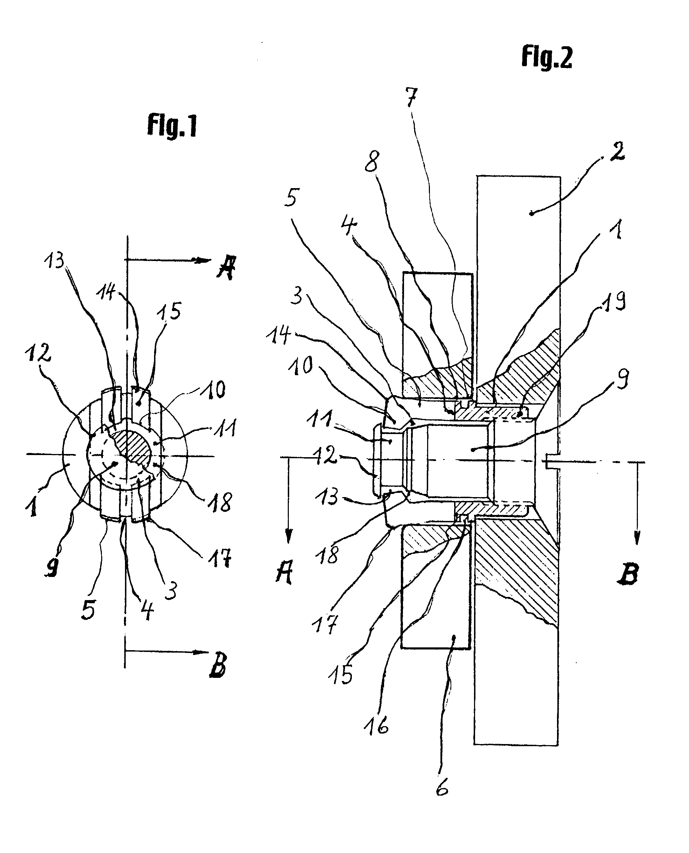

Mit Fig. 1 und Fig. 2 ist eine Schiebe- Klemmhalterung (1) ersichtlich, die am Haltegegenstand (2) angebracht ist; durch die eine abgestufte Bohrung (3) verläuft und am vorderen Ende achsiale schlitzähnliche Ausnehmungen (4) eingeformt sind, zwischen denen sich radiale federnde und aufspreizbare Zungen (5), die beliebig am Kreisumfang in der Anzahl und Anordnung verteilt sein können, vorhanden sind, die beim Überschieben des festzuhaltenden Gegenstandes (6) in seiner Bohrungsöffnung (7) auf die Bohrungswandung (8) klemmend einwirken und das Festhalten des Gegenstandes (6) bewirken. In der abgestuften Bohrung (3) der Schiebe- Klemmhalterung (1) verläuft achsial ein entsprechend geformter Bolzen (9), der gleichzeitig als Befestigungsschraube ausgebildet ist und im Bereich der Verdickung der Zungen nach innen (10) eine radiale Ausnehmung (11) aufweist, die den Federweg der Zungen (5) begrenzt und mit seinem vorderen Ende (12) die scharfen Kanten an der Bohrungsöffnung (13) und Zungen (5) abdeckt. Die Ausnehmung (11) am Bolzen (9) kann auch im Durchmesser abgestuft (18) sein oder zum hinteren Ende (19) der Schiebe- Klemmhalterung (1) hin sich konisch erweitern, um den Federweg der Zungen (5) bei entsprechender achsialer Verschiebung des Bolzens (9) zu Blockieren. Bei Ausbildung des Bolzen (9) als Befestigungsschraube, kann der Schraubenkopf dieser als Zylinderkopf oder Senkkopf ausgebildet sein. Zur wahlweisen Anwendung beider Schraubenkopfarten mit einer Schraubenausführung, wird eine dickere Unterlegscheibe vorgeschlagen, die in ihrer Bohrung mit einer dem Senkschraubenkopf angepassten Ansenkung zwischen Haltegegenstand (2) und Schraubensenkkopf zwischen gelegt wird, um dadurch zur Bildung eines Zylinderkopfes zu dienen und für eine Befestigung mit Senkkopfschraube als Voraussetzung wird die Unterlegscheibe abgenommen.

Für eine Befestigung von zwei Schiebe- Klemmhalterungen (1) am Haltegegenstand (2), kann eine auf der vorderen Seitenfläche und eine auf der Rückseite des Haltegegenstandes (2) achsparallel angebracht sein, die mit dem Bolzen oder Gewindebolzen (9), der mit einer längs verlaufenden Bohrung hülsenförmig ausgebildet sein kann und an seinen Enden in Achsrichtung die Merkmale (11) und (12) aufweist, entsprechend befestigt sein. Am vorderen Ende der Schiebe- Klemmhalterung (1) ist diese an der Umlaufkante (14) angefast oder mit einem Radius versehen und am hinteren Ende (19) der Schiebe- Klemmhalterung (1) kann im Bereich der Zungenwurzeln (15) eine radiale Ausnehmung (16) vorhanden sein, mit der die Federkraft der Zungen (5) vorbestimmt wird.

## Patentansprüche

1. Schiebe- Klemmhalterung zum Festhalten eines Gegenstandes, der von dieser durch einfaches Aufschieben klemmend gehalten wird, dadurch gekennzeichnet, dass die SchiebeKlemmhalterung (1) achsial eine Stufenbohrung (3) aufweist, durch die ein entsprechend mit einer radialen Ausnehmung (11) ausgebildeter Bolzen oder Gewindebolzen (9) verläuft, und am vorderen Ende mit schlitzähnlichen Ausnehmungen (4) versehen ist, zwischen denen sich radial federnde und aufspreizbare Zungen (5) vorhanden sind, über die ein festzuhaltender Gegenstand (6) mit einer eingeformten Bohrungsöffnung (7) geschoben, oder bei einem ortsgebundenen Gegenstand (6) an diesem klemmend in der Bohrungsöffnung (7), mit der Schiebe- Klemmhalterung (1) der Haltegegenstand (2) gehalten wird.

2. Schiebe- Klemmhalterung nach Anspruch 1, dadurch gekennzeichnet, dass die aufspreizbaren Zungen (5) im bereich der Verdickung nach innen (10) auch am Aussenumfang nach aussen eine Verdickung (17) aufweisen.

3. Schiebe- Klemmhalterung nach Anspruch 1 u. 2, dadurch gekennzeichnet, dass die vorhandenen Zungen (5) in der Anzahl und Anordnung am Umfang im vorderen Ende im Halteteil der Schiebe- Klemmhalterung (1) beliebig angeordnet angebracht sind.

4. Schiebe- Klemmhalterung nach Anspruch 1 - 3, dadurch gekennzeichnet, dass der Bolzen (9) in der Ausnehmung (11) und (18) im Durchmesser radial abgestuft ist.

5. Schiebe- Klemmhalterung nach Anspruch 1 - 4, dadurch gekennzeichnet, dass der Bolzen (9) nach der Ausnehmung (11) zum hinteren Ende (19) der Schiebe- Klemmhalterung (1) hin, mit einem konischen sich radial erweiternden Abschnitt versehen ist.

6. Schiebe- Klemmhalterung nach Anspruch 1 - 5, dadurch gekennzeichnet, dass der Bolzen (9) gleichzeitig auch als Befestigungsschraube oder zur Nietbefestigung zum Befestigen der Schiebe- Klemmhalterung (1) ausgeblendet ist.

7. Schiebe- Klemmhalterung nach Anspruch 1 - 6, dadurch gekennzeichnet, dass der Bolzen (9) gleichzeitig als Befestigungsschraube mit Senkkopf ausgebildet ist und zwischen Haltegegenstand (2) und Befestigungsschraubensenkkopf (9) eine dickere Unterlegscheibe mit einer starken Ansenkung ihrer Durchgangsbohrung vorhanden ist, die mit der Senkung auf den Schraubensenkkopf eingreift und beim Montagevorgang einen Zylinderkopf an der Befestigungsschraube (9) bildet.

8. Schiebe- Klemmhalterung nach Anspruch 1 - 7, dadurch gekennzeichnet, dass eine Schiebe- Klemmhalterung (1) am Haltegegenstand (2) auf der vorderen Seitenfläche und eine zweite Schiebe- Klemmhalterung (1) auf der Rückseite des Haltegegenstandes (2) mit einem Bolzen (9) achsparallel befestigt ist.

9. Schiebe- Klemmhalterung nach Anspruch 1 - 8, dadurch gekennzeichnet, dass die Schiebe- Klemmhalterung (1) selbst mit dem hinteren Ende (19) am Haltegegenstand (2) eingeschoben, eingeschraubt, eingenietet oder geklebt befestigt ist.
